# EUROPEAN PATENT APPLICATION

(11) **EP 1 111 739 A2**
(43) Date of publication of application: **27.06.2001**
(21) Application number: 00311352.9
(22) Date of filing: 19.12.2000
(51) Int. Cl.: H01S 3/02, H01S 3/042, H01S 3/0941

(54) **Laser oscillator apparatus**

(30) Priority: 20.12.1999 JP 36040199
(71) Applicant: Miyachi Technos Corporation, Noda-shi, Chiba-ken (JP)
(72) Inventor: Akagi, Masayuki, Noda-shi, Chiba-ken (JP)
(74) Representative: Spall, Christopher John

(57) **Abstract**

A retaining unit 26 of a laser oscillator 10 retains, in an integratedly coupled fashion, a chamber 40 for accommodating and retaining a cylindrical YAG rod 16 and excitation light supply units 18 (excitation laser units 60), a mirror retainer 42 for embracing and retaining a total reflection mirror 20, and a coupling unit 44 interposed between the chamber 40 and the mirror retainer 42 in an intimately contacted fashion. Cooling water CW introduced from a cooling water inlet port (IN) 28 of the coupling unit 44 into the interior of the retaining unit 26 flows through connection passages 44b within the coupling unit 44, connection passages 80 within the chamber 40, internal flow paths of the excitation laser units 60, connection passages 68 at outside end of the chamber 40, a flow path 17 within a tube 56, connection passages 82 within the chamber 40, and connection passages 44c within the coupling unit 44, into a cooling water outlet port (OUT) 30 for discharge therefrom.

## Description

### BACKGROUND OF THE INVENTION

### 1. Field of the Invention

The present invention relates to a laser oscillating apparatus using a solid-state laser medium.

### 2. Description of the Related Arts

In a typical laser oscillating apparatus, a laser medium is basically interposed between a total reflection mirror and a partial reflection mirror (output mirror) which are spaced a distance apart from each other and arranged in a parallel relationship. When laser excitation means impart an energy to the laser medium by a predetermined method to excite medium atoms, beams of light are emitted from the laser medium as a result of stimulated emission. Of the light emitted, light having a resonance frequency are confined and amplified between the total reflection mirror and the output mirror, some of which are output or emitted as laser beams from the output mirror.

It is common for YAG laser or other solid-state laser oscillating apparatuses to compulsorily cool the solid-state laser medium and excitation light supply means acting as laser excitation means by a coolant, e.g., cooling water in order to suppress the thermal lens effect to enhance the laser oscillation stability. In a typical cooling mechanism, the solid-state laser medium and the excitation light supply means are accommodated in a single chamber provided internally with a predetermined piping or flow paths through which cooling water flows in a circulative fashion. The cooling water absorbs heat generated by the solid-state laser medium and the excitation light source of the excitation light supply means and thereafter is discharged to the exterior of the chamber.

By the way, in the laser oscillating apparatus the resonator mirrors also generate heat in the process of laser beam resonance amplification. A possible deformation of the resonator mirrors arising from the thermal expansion or thermal shrinkage may impair the parallel relationship between the two mirrors (total reflection mirror and output mirror), resulting in unstable laser oscillating behavior or oscillation outputs. Therefore, to assure stabilized laser oscillations, it is preferred to subject the resonator mirrors as well to the temperature control by use of the coolant.

However, in the event of provision of the cooling mechanism for the resonator mirrors, another cooling mechanism different from that for the solid-state laser medium and the excitation light source may separately be needed, or a complicated piping system, an increased apparatus space and apparatus cost may result. For these reasons, the conventional solid-state laser oscillating apparatus has not effected cooling or temperature control for the resonator mirrors.

Furthermore, such a conventional chamber was provided with a complicated and bulky mechanism, hard to reduce the dimensions, for forming or building a cooling piping or flow path around the laser rod or the excitation light source.

### SUMMARY OF THE INVENTION

The present invention was conceived in view of the above problems. It is therefore an object of the present invention to provide a laser oscillating apparatus capable of effectively cooling a solid-state laser medium, excitation light supply means and optical resonator mirrors making up a laser oscillator, by a compact construction including a reduced number of components.

Another object of the present invention is to provide a laser oscillating apparatus achieving an effective cooling of the solid-state laser medium and the excitation light supply means by use of a compact configuration with a less number of constituent elements.

According to a first aspect of the present invention there is provided a laser oscillating apparatus comprising a solid-state laser medium having both end faces to emit light when excited; excitation light supply means for supplying an excitation light to the solid-state laser medium; a pair of optical resonator mirrors arranged confronting the both end faces, respectively, of the solid-state laser medium; a retaining unit for integratedly retaining the solid-state laser medium, the excitation light supply means and at least one of the pair of optical resonator mirrors; and coolant supply means for supplying a coolant to the retaining unit.

By virtue of such an integrated retention of the three elements, i.e., the solid-state laser medium, the excitation light supply means and the optical resonator mirrors within the common retaining unit, the present invention enables a unitary cooling mechanism to be formed in which a coolant is introduced through the common coolant introduction port into the retaining unit, the introduced coolant flowing through the flow path within the retaining unit and being discharged through the common coolant discharge port, whereby it is possible to effectively cool the heat-generating apparatus parts by a compact construction with a less number of components.

In the laser oscillating apparatus of the present invention, preferably, the retaining unit includes first and second ports, one of which introduces the coolant, the other of which discharges the coolant; a first coolant flow path thermally coupled to the solid-state laser medium; a second coolant flow path thermally coupled to the laser excitation means; and a third coolant flow path for connecting the first and second coolant flow paths in series between the first and second ports. In this construction, a plurality of laser excitation means may be arranged for the solid-state laser medium, and in that case a plurality of second coolant flow paths corresponding to the plurality of excitation light supply means may be connected in parallel.

In the above construction, preferably the third coolant flow path includes a first connection passage for connecting the first port and one end of the first coolant flow path; a second connection passage for connecting the other end of the first coolant flow path and one end of each of the second coolant flow paths; and a third connection passage for connecting the other end of each of the second coolant flow paths and the second port.

In another preferred form of the laser oscillating apparatus of the present invention, the retaining unit may includes a chamber for accommodating the solid-state laser medium and the excitation light supply means; a mirror retainer made of a heat-conductive material, for embracing and retaining the pair of optical resonator mirrors; and a coupling unit made of a heat-conductive material and sandwiched between the chamber and the mirror retainer in a contacted manner, the coupling unit having a beam passage through which the laser beam is propagated between the solid-state laser medium and the pair of optical resonator mirrors.

In this construction, preferably the retaining unit includes first and second ports formed in the coupling unit, one of which introduces the coolant, the other of which discharges the coolant; a first coolant flow path thermally coupled to the solid-state laser medium within the interior of the chamber; a second coolant flow path thermally coupled to the excitation light supply means within the interior of the chamber; a third coolant flow path for connecting the first and second coolant flow paths; and a fourth coolant flow path for connecting the first and second coolant flow paths to the first and second ports, respectively, within the interior of the chamber or the coupling unit.

In the laser oscillating apparatus of the present invention, preferably the first coolant flow path embraces an excitation surface of the solid-state laser medium in a hermetically spaced-apart manner, the first coolant flow path being formed of a light-transmissive tube through which an excitation light from the excitation light supply means passes for impingement on the excitation surface. The second coolant flow path is preferably defined by a through hole extending through a heat-conductive member connected to a heat-generating portion of the excitation light supply means.

For the pair of optical resonator mirrors, the mirror retainer may be fitted with means for adjusting the inclination of resonator mirrors.

In order to achieve the another object, according to a second aspect of the present invention there is provided a laser oscillating apparatus comprising a rod-shaped solid-state laser medium for emitting light from its axial end faces when its side surface is irradiated by excitation light; a light-transmissive tube embracing the solid-state laser medium in a spaced-apart manner and forming a first coolant flow path along the side surface of the solid-state laser medium; an excitation laser unit having a laser beam emitting surface on which a plurality of semiconductor laser elements for generating an excitation laser beam are arrayed in line, having a heat-conductive retaining member for retaining the plurality of semiconductor laser elements, and having a second coolant flow path extending through the retaining member, the excitation laser unit being radially arranged around the side surface of the solid-state laser medium in such a manner that the laser beam emitting surface confronts the side surface of the solid-state laser medium; first and second ports one of which introduces a coolant, the other of which discharge the coolant; and a third coolant flow path for connecting the first coolant flow path and each of the second flow paths in series between the first and second ports, the third coolant flow path connecting the second coolant flow paths to one another in parallel.

In this construction, the plurality of excitation laser units are radially arranged around the side surface of the single rod-shaped solid-state laser medium so that the excitation laser beams emitted from the laser beam emitting surfaces of the units are collectively irradiated and supplied on the side surface of the solid-state laser medium from all directions, to thereby allow a high density and proximate arrangement of the excitation laser units within a small space. In addition, for the plurality of excitation laser units the coolant supplied between the first and second ports flows in parallel and in a dispersed fashion through the second flow paths thermally coupled to the excitation laser units, whereas for the solid-state laser medium needing the most powerful cooling all the coolant flows through the first coolant flow path formed along the solid-state laser medium. It is thus possible to provide an effective cooling depending on each heat-generating elements despite a compact space.

### BRIEF DESCRIPTION OF THE DRAWINGS

The above and other objects, aspects, features and advantages of the present invention will become more apparent from the following detailed description when read in conjunction with the accompanying drawings, in which:
Fig. 1 is a block diagram showing the basic configuration of a laser oscillating apparatus in accordance with an embodiment of the present invention and the general configuration of a laser-processing apparatus using the laser oscillating apparatus;
Fig. 2 is a longitudinal sectional view showing the specific example of the laser oscillator in the embodiment;
Fig. 3 is a left side elevational view of the laser oscillator in the embodiment viewed from the direction of arrow A of Fig. 2;
Fig. 4 is a right side elevational view of the laser oscillator in the embodiment viewed from the direction of arrow B of Fig. 2;
Fig. 5 is a perspective view showing the construction of a retaining plate disposed in a chamber of the laser oscillator of the embodiment;
Fig. 6 is a transverse sectional view of the laser oscillator taken along a line C-C and viewed from the direction of the arrows C of Fig. 2;
Fig. 7 is a perspective view showing the external appearance of an excitation laser unit disposed in the chamber of the laser oscillator of the embodiment; and
Fig. 8 is a view from the direction of the arrows D of Fig. 2.

### DESCRIPTION OF THE PREFERRED EMBODIMENT

The present invention will now be described with reference to the accompanying drawings which illustrate a presently preferred exemplary embodiment thereof in a non-limitative manner.

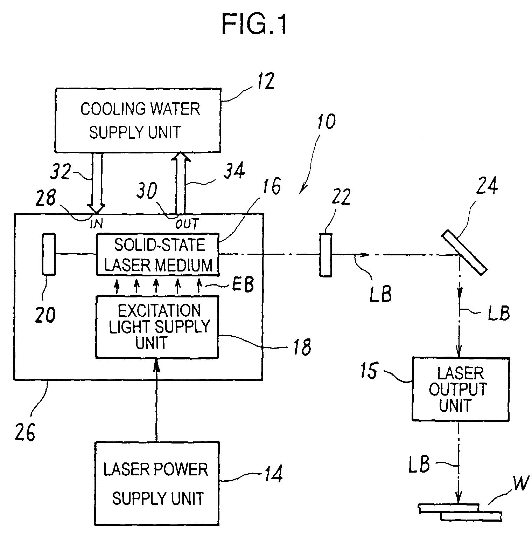

Fig. 1 depicts the basic configuration of a laser oscillating apparatus in accordance with an embodiment of the present invention and the general configuration of a laser processing apparatus using the laser oscillating apparatus. This laser oscillating apparatus comprises a laser oscillator 10, a cooling water supply unit 12, a laser power supply unit 14 and a laser output unit 15.

The laser oscillator 10 includes a solid-state laser medium, e.g., a YAG rod 16, an excitation light supply unit 18 for supplying an excitation light to the YAG rod 16, and a pair of optical resonator mirrors, i.e., a total reflection mirror 20 and a partial reflection mirror (output mirror) 22 which confront axial ends of the YAG rod 16 and which are spaced a predetermined distance apart from each other.

In the laser oscillator 10, the excitation light supply unit 18 generates excitation light EB depending on the electric power supplied from the laser power supply unit 14 and laterally irradiates the excitation light EB on the YAG rod 16, with the result that the YAG rod 16 is excited by the energy of the excitation light, so that the stimulated emission causes axial beams-of-light emission from the rod end faces. Of the beams of light emitted from the end faces of the YAG rod 16, beams of a resonance frequency are confined and amplified between the total reflection mirror 20 and the output mirror 22, some of which beams are output as YAG laser beams LB from the output mirror 22.

The YAG laser beams LB output from the laser oscillator 10 are transmitted via an optical transmission system, e.g., a reflection mirror 24 to the laser output unit 15 incorporating a condenser lens through which laser beams LB are condensed and irradiated on a workpiece W.

According to the embodiment of the present invention, integratedly received in a single retaining unit 26 are the YAG rod 16, the excitation light supply unit 18 and one of the optical resonator mirror pair, e.g., the total reflection mirror 20, of the elements making up the laser oscillator 10. The retaining unit 26 is provided with an inlet port (IN) 28 and an outlet port (OUT) 30 for cooling water and internally with a cooling water flow path defined by a predetermined route, preferably thermally coupled to the solid-state laser medium 16 and the excitation light supply unit 18. The cooling water supply unit 12 supplies cooling water controlled to a predetermined temperature to the cooling water inlet port (IN) 28 of the retaining unit 26 by way of piping 32 and recovers it through the cooling water output port (OUT) 30 of the retaining unit 26 by way of piping 34. Within the interior of the retaining unit 26 the cooling water circulates through the flow path so that the elements 16, 18 and 20 can simultaneously be cooled by the common cooling water.

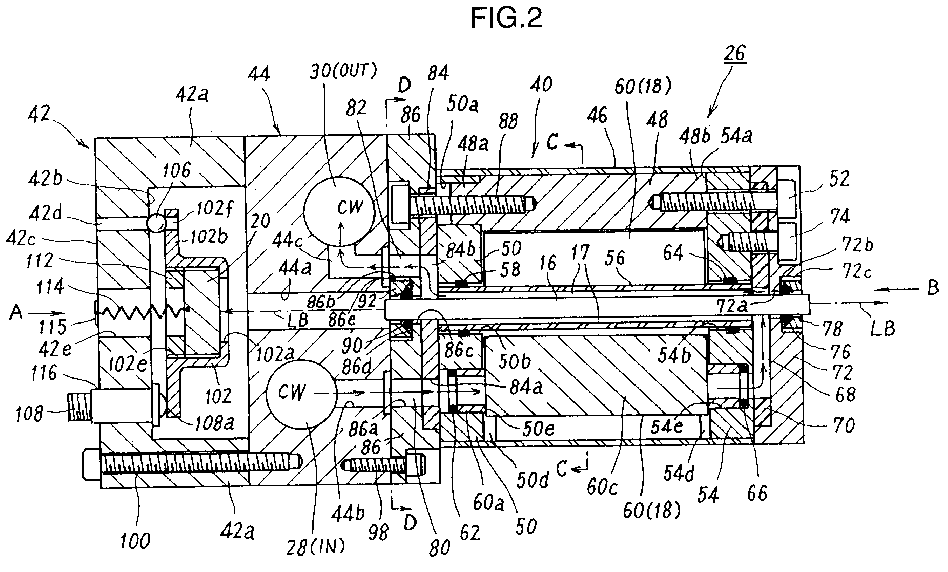

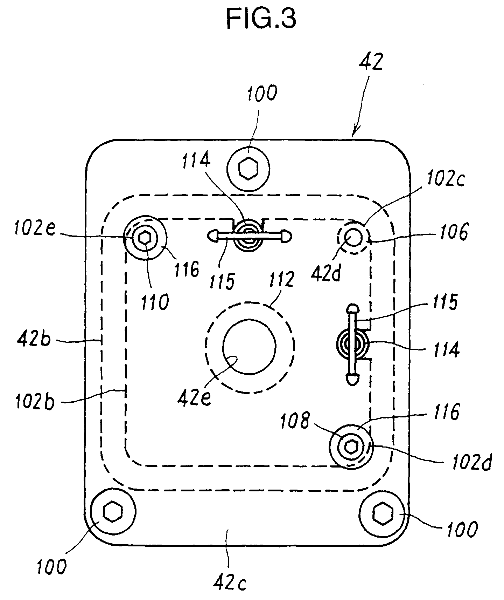

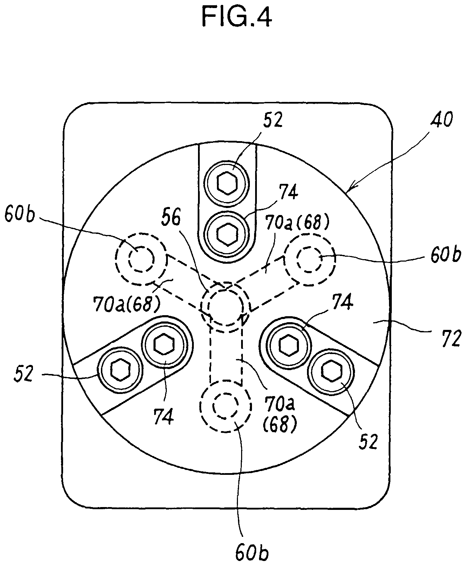

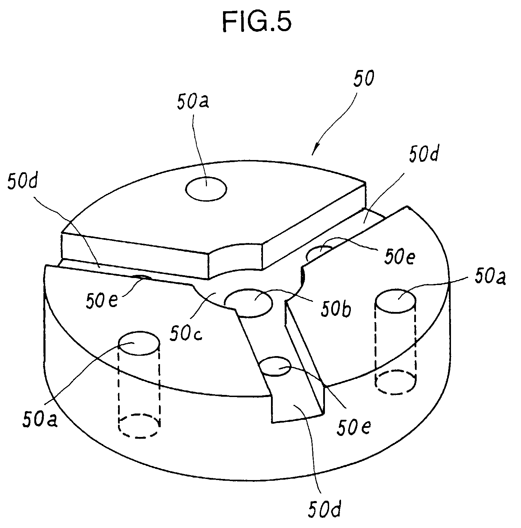

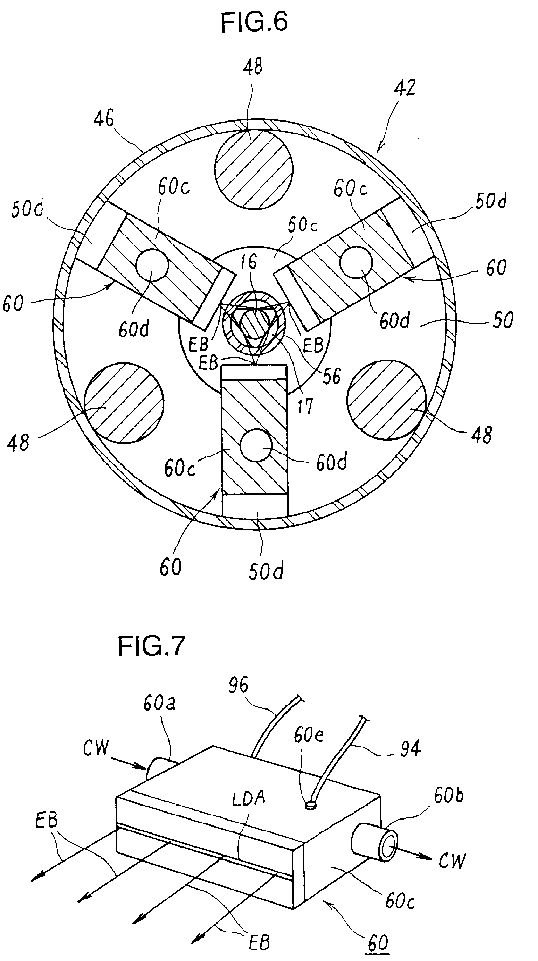

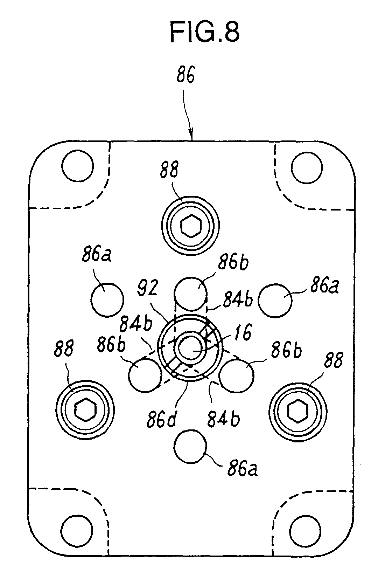

Figs. 2 to 8 depict by way of example the specific configuration of the laser oscillator 10 in embodiment of the present invention. Fig. 2 is a longitudinal sectional view of the laser oscillator 10, showing the internal structure thereof. Figs. 3 and 4 are left and right side elevations, respectively, of the laser oscillator 10 viewed from the direction of arrows A and B, respectively, of Fig. 2. Fig. 5 is a perspective view showing the construction of an inner retaining plate disposed in a chamber of the laser oscillator 10. Fig. 6 is a transverse sectional view of the laser oscillator 10 taken along a line C-C and viewed from the direction of arrows C of Fig. 2. Fig. 7 is a perspective view showing the external appearance of an excitation laser unit disposed in the chamber of the laser oscillator 10. Fig. 8 is a view from the direction of arrows D of Fig. 2.

Referring to Figs. 2 to 4, the retaining unit 26 of the laser oscillator 10 comprises an integratedly coupled chamber 40 for accommodating and retaining the cylindrical YAG rod 16 and the excitation light supply unit 18, a mirror retainer 42 for embracing and retaining the total reflection mirror 20, and a coupling unit 44 interposed between the chamber 40 and the mirror retainer 42 in an intimately contacted manner.

The chamber 40 includes a cylindrical cover member 46 made of an electrically insulating and lightproof material, e.g., resin, a plurality of, e.g., three axially extending cylindrical support rods 48 circumferentially equi-angularly, e.g., 120 degrees spaced apart from one another within the interior of the cover member, an electrically insulating disk-like retaining plate 50 fitted to one end portions (inner end portions) of the support rods 48, and an electrically insulating disk-like retaining plate 54 securely fastened via bolts 52 to the other end portions (outer end portions) of the support rods 48.

Referring to Fig. 5, the retaining plate 50 has three through holes 50a formed along the circumference at 120 degrees equiangular interval and a through hole 50b formed at the center thereof. The retaining plate 50 has a circular recess 50c formed around the center through hole 50b and has three recesses 50d extending radially from the circular recess 50c at 120 degrees equiangular interval between the adjacent through holes 50a. The radial recesses 50d each have a through hole 50e formed at the intermediate part thereof.

Referring back to Fig. 2, inner end portions 48a of the support rods 48 are fitted into the circumferential through holes 50a of the retaining plate 50, and one end portion of a transparent tube 56 made of, e.g., glass is fitted via an O-ring 58 into the center through hole 50b of the retaining plate 50. The transparent tube 56 accommodates the YAG rod 16 in a spaced-apart manner. The radial recesses 50d of the retaining plate 50 receive one end portions of excitation laser units 60 of the excitation light supply unit 18. In this case, a cylindrical cooling water introduction port 60a projects from one end face of each excitation laser unit 60 and is fitted via an O-ring 62 into the through hole 50e in the radial recess 50d. Incidentally, a cylindrical gap is defined between the inner surface of the tube 56 and the outer surface or periphery of the YAG rod 16 and forms a flow path 17 through which cooling water CW can flow.

The retaining plate 54 on the other hand is formed with circular recesses 54a positioned correspondingly to the circumferential through holes 50a of the retaining plate 50, and with a center through hole 54b positioned correspondingly to the center through hole 50b of the retaining plate 50. The retaining plate 54 is further formed with a circular recess 54c and radial recesses 54d positioned correspondingly to the circular recess 50c and the radial recesses 50d, respectively, of the retaining plate 50.

In Fig. 2, outer end portions 48b of the support rods 48 are fitted into the circumferential through hole 54a of the retaining plate 54, and the other end portion of the transparent tube 56 is fitted via an O-ring 64 into the center through hole 54b of the retaining plate 54. The radial recesses 54d of the retaining plate 54 receive the other end portions of the excitation laser units 60. In this case, a cylindrical cooling water discharge port 60b projects from the other end face of each excitation laser unit 60 and is fitted via an O-ring 66 into a through hole 54e formed in the radial recess 54d.

A connection passage 68 is formed outside the retaining plate 54, the connection passage 68 serving to connect the cooling water discharge port 60b of each excitation laser unit 60 to the outer end of the flow path defined within the transparent tube 56.

More specifically, a sheet packing 70 made of silicone rubber is adhered to the outer surface of the retaining plate 54. As indicated by broken lines in Fig. 4, the packing 70 is formed with openings 70a that extend radially inwardly from the cooling water discharge ports 60b of the excitation laser units 60 toward the outer end of the transparent tube 56. A closing plate 72 is fitted on the packing 70 from axially and radially outside, with bolts 52 and 74 being externally screwed into the support rods 48 and the retaining plate 54, respectively, through the closing plate 72 and the packing 70. The closing plate 72 has an aperture 72a formed at the center thereof for inserting the outer end portion of the YAG rod 16 and has a circular recess 72b formed in the outer surface of the closing plate 72 around the rod insertion aperture 72a. The circular recess 72b has an outer peripheral wall surface with a tapped (internally threaded) portion 72c. A ring screw 78 having an externally threaded portion on its outer peripheral surface is screwed via an O-ring 76 into the circular recess 72b. Such a construction allows a formation of the connection passage 68 that is hermetically sealed around the opening 70a of the packing 70.

For convenience of explanation, the center circular recess 72b, the ring screw 78, etc are omitted from the outer surface of the closing plate 72.

In Fig. 2, connection passages 80 and 82 are formed outside of the retaining plate 50, for connecting the cooling water induction port 60a of each excitation laser unit 60 and the inner end of the flow path within the transparent tube 56, respectively, to corresponding flow paths within the coupling unit 44.

More specifically, a sheet packing 84 made of, e.g., silicone rubber is adhered to the outer surface of the retaining plate 50 (when viewed from the center of the chamber 40). The packing 84 has an opening 84a formed at a position corresponding to that of the cooling water introduction port 60a of each excitation laser unit 60 and has an opening 84b extending a predetermined length radially outwardly (toward three directions at e.g., 120 degrees equiangular interval) from the inner end of the transparent tube 56 as indicated by broken lines in Fig. 8. A closing plate 86 is fitted on the packing 84 from axially and radially outside, with bolts 88 being externally screwed into the support rods 48 through the closing plate 86 and the packing 84. The closing plate 86 has circular openings 86a formed in registration with the circular openings 84a of the packing 84 and has circular openings 86b formed in registration with the radially outward end of the radial openings 84b of the packing 84. The closing plate 86 further has an aperture 86c formed at the center thereof for inserting the inner end portion of the YAG rod 16, with a circular recess 86d formed in the outer surface of the closing plate 86 around the rod insertion aperture 86c. The circular recess 86d has an outer peripheral wall surface with a tapped (internally threaded) portion 86e. A ring screw 92 having an externally threaded portion on its outer peripheral surface is screwed via an O-ring 90 into the circular recess 86d. Such a construction allows a formation of the connection passages 80 which extend through the circular openings 84a and 86a of the packing 84 and the closing plate 86 in a hermetically sealed fashion and a formation of the connection passages 82 which are hermetically sealed around the radial opening 84b of the packing 84 and which extend through the circular openings 86b of the closing plate 86 in a hermetically sealed fashion.

Each of the excitation laser units 60 has a heat-conductive, e.g., copper block or holder 60c in the shape of rectangular parallelepiped as shown in Fig. 7. The cylindrical cooling water introduction port 60a and discharge port 60b are formed in side surfaces in the longitudinal direction of the block, with a flow path 60d being formed in the interior of the block for flowing of the cooling water between the two ports 60a and 60b. The front surface of the block 60c is provided with a semiconductor laser acting as an excitation light source in the form of, e.g., an array of laser diodes LD. A pair of power input electrodes 60e are provided on side surfaces in the thickness direction of the block 60c. The pair of electrodes 60e are connected via electric cables or cords 94 and 96 to the output terminals of the laser power supply unit 14 (see Fig. 1).

As can be seen in Figs. 2 and 6, within the chamber 40 the laser diode array LDA of each excitation laser unit 60 is arranged so as to confront the peripheral surface (excitation surface) of the YAG rod 16. In response to a supply of electric power from the laser power supply unit 14, each laser diode emits an excitation laser beam EB. The emitted laser beam EB passes through the glass tube 56 in front and impinges on the peripheral surface (excitation surface) of the YAG rod 16 to excite the YAG rod 16.

It is to be noted that the excited YAG rod 16 generates a heat during the laser oscillation. Heat is also generated from the laser diode array LDA as the beam emitting unit of each excitation laser unit 60. The heat arising from the YAG rod 16 and the LDA is absorbed by cooling water CW flowing through the neighbor flow paths 17 and 60d thermally coupled to the YAG rod 16 and the LDA.

The coupling unit 44 is provided in the form of a rectangular parallelepiped, heat-conductive block made of, e.g., stainless steel. The coupling unit 44 is securely fastened via a bolt 98 to the closing plate 86 of the chamber 40 in an intimately contacted manner. The coupling unit 44 has at its center a through hole 44a that receives the inner end face of the YAG rod 16 for allowing a light or laser beam propagated over the optic axis of the YAG rod 16 to pass therethrough. The coupling unit 44 is provided internally with a flow path (connection passage) 44b extending from the cooling water inlet port (IN) 28 to the circular openings 86a of the closing plate 86 of the chamber 40 by bypassing the through hole 44a, and with a flow path (connection passage) 44c extending from the cooling water outlet port (OUT) 30 to the circular openings 86b of the closing plate 86.

Cooling water CW from the cooling water supply unit 12 is introduced via the piping 32 and through the cooling water inlet port (IN) 28 of the coupling unit 44 into the interior of the retaining unit 26. The cooling water CW then passes through the connection passages 44b within the coupling unit 44 and through the connection passages 80 within the chamber 40, for supply to the cooling water introduction port 60a of each excitation laser unit 60. After the supply to each excitation laser unit 60, the cooling water CW flows longitudinally through the internal flow path 60d within the block 60c of each unit 60 while simultaneously absorbing heat generated by each laser diode array LDA. The cooling water CW is then discharged from the cooling water discharge ports 60b of the excitation laser units 60 and flows through the connection passages 68 at the outer end portion of the chamber 40 and from the outer end of the transparent tube 56 into the flow path 17 within the tube 56. After inflow from the outer end into the flow path 17 within the tube 56, the cooling water CW flows toward the inner end of the tube 56 along the side surface or outer peripheral surface of the YAG rod 16 while simultaneously absorbing heat generated by the YAG rod 16. The cooling water CW then exits the inner end of the tube 56 and diverges into the connection passages 82. The cooling water CW further flows through the connection passages 44c within the coupling unit 44 into the cooling water outlet port 30, from which it is recovered through the piping 34 by the cooling water supply unit 12.

The cooling water supply unit 12 is equipped with a heat exchanger in order to control (cool) the temperature of the cooling water CW recovered from the cooling water outlet port (OUT) 30 of the retaining unit 26 to a predetermined level, after which the temperature controlled cooling water CW is again fed to the cooling water inlet port (IN) 28 of the retaining unit 26.

In this embodiment, as described hereinabove, the plurality of, e.g., three excitation laser units are radially arranged at a constant angular spacing around the side surface or outer peripheral surface of the YAG rod 16 within the chamber 40 of the retaining unit 26 so that the excitation laser beams EB from the laser diode arrays LDA on the front surfaces (laser beam emission surfaces) of the excitation laser units 60 can collectively be irradiated or strike on the outer peripheral surface of the YAG rod 16 from three different directions. To this end, the plurality of excitation laser units 60 are disposed within a compact chamber space in a high-density and proximate arrangement.

Then, within the interior of the chamber 40, for the three excitation laser units 60 the circulatively supplied cooling water CW can flow in parallel and in a dispersed fashion through the flow paths 60d within the heat conductive blocks 60c of the units 60, whereas for the YAG rod 16 needing the most powerful cooling all the cooling water can flow through the flow path 17 around the YAG rod 16 along the inner wall surface of the tube 56, whereby it is possible to achieve an effective cooling suited for the respective heat-generating parts (YAG rod 16, LDAs) regardless of the compact chamber space.

The mirror retainer 42 is a box-shaped member made of a heat-conducting material, e.g., stainless steel. The mirror retainer 42 has four side walls 42a, the end face of one of which is fastened via bolts 100 to the side surface opposite the chamber 40 of the coupling unit 44 in an intimately contacted manner. Within an inside recess 42b of the mirror retainer 42 the total reflection mirror 20 is retained in a heat conductive, e.g., aluminum cap-like mirror case 102 in such a manner that the mirror 20 confronts the through hole 44a of the coupling unit 44 and thus confronts the inner end face of the YAG rod 16 via that through hole 44a. The mirror case 102 has an opening 102a formed at the cap top surface, i.e., at the site in front of the total reflection mirror 20 in order to ensure that the laser beams LB can be propagated between the total reflection mirror 20 and the YAG rod 16.

The mirror case 102 has a flange or a peripheral portion 102b shaped into a square as shown in Fig. 3. The back (the surface confronting the bottom of the recess 42b) of the peripheral portion 102b abuts at its one corner 102c against a ball 106 for support. At corners 102d and 102e adjacent to or on both sides of the support 106, the back of the peripheral portion 102b abuts against semispherical inner ends 108a of X and Y direction slope adjusting screws 108 and 110. With respect to the peripheral portion 102b the case 102 has a radially inside portion which is opened so as to allow insertion and removal of the mirror 20 and which has a tapped or internally threaded portion 102e. The tapped portion 102a threadedly receives a ring screw 112 to retain the total reflection mirror within the case 102. At substantially intermediate positions between the support ball 106 and the X and Y direction slope adjusting screws 108 and 110, respectively, compression coiled springs 114 are arranged between the back of the total reflection mirror 20 and the outer surface of the mirror retainer 42 so that resilient tensile force of the coil spring 114 presses the total reflection mirror 20 and the mirror case 102 via the support 106 and the X and Y direction slope adjusting screws 108 and 110 against the mirror retainer 42 (in greater detail, against the bottom of the recess 42b).

The support ball 106 abuts against the corner 102c of the mirror case 102 in such a manner that the support ball 106 is clamped by holes 102f and 42d of the mirror case 102 and the mirror retainer 42, respectively, the holes 102f and 42d having a smaller diameter than that of the ball. This enables the mirror case 102 to vary the orientation of the mirror in X and Y directions with respect to the support ball 106. On the other hand, the X and Y direction slope adjusting screws 108 and 110 are threadedly engaged with tubular nuts 116 that is fitted into the through holes of the mirror retainer 42, with the semispherical extremities 108a and 110a (110a is invisible) abutting against the corners 102d and 102e, respectively, of the mirror case 102. As a result, by turning the X direction slope adjusting screw 108 for example, the extremity 108a of the screw 108 is axially displaced so that depending on the amount of displacement the X direction slopes of the mirror case 102 and the total reflection mirror 20 can be adjusted. In the same manner, by turning the Y direction slope adjusting screw 110, the Y direction slopes of the mirror case 102 and the total reflection mirror 20 can be adjusted.

The mirror retainer 42 has at its central portion a circular opening 42e having substantially the same diameter as that of the inner opening of the ring screw 112 such that leak beams from the back of the total reflection mirror 20 can externally be extracted through the inner opening of the ring screw 112 and the opening 42e of the mirror retainer 42. It is thus possible to place a photosensor not shown for example outside the opening 42e of the mirror retainer 42, detect the light intensity of the leak beams, and to determine the output of the laser beams LB from the light intensity detected values.

In the laser oscillating apparatus of this embodiment, as described hereinabove, the total reflection mirror 20 is received in the recess or chamber 42b of the heat conductive, box-shaped mirror retainer 42 that is joined to the heat conductive coupling unit 44 in an intimately contacted manner. By virtue of the circulative supply of the cooling water CW to its interior flow paths 44b and 44c, the coupling unit 44 can have a temperature kept at a certain level. The mirror retainer 42 can also have an unvarying temperature due to its thermal integration with the coupling unit 44. Thus, by placing the total reflection mirror 20 in a temperature controlled space having a large heat capacity and managed to keep a constant temperature, a possible heat generation by the total reflection mirror 20 during the laser oscillation can rapidly be absorbed in this temperature controlled space so as to obviate or suppress the thermal expansion or thermal shrinkage of the mirror 20. Accordingly, the laser processing apparatus of this embodiment is capable of subjecting the workpiece W to a high-quality laser processing by use of laser beams LB having a stabilized output.

It would also be possible to form a flow path within the interior of the mirror retainer 42, provide the coupling unit 44 with a connection passage leading to the flow path of the mirror retainer 42, and circulatively supply cooling water CW to the internal flow path of the mirror retainer 42.

In this embodiment, as set forth hereinabove, the three elements, i.e., the YAG rod 16, the excitation light supply unit 18 (excitation laser unit 60) and the total reflection mirror 20 are integratedly retained in the common retaining unit 26 so that the heat-generating parts within the retaining unit 26 are cooled or temperature controlled by cooling water CW that is circulated and supplied through the common cooling water inlet port (IN) 28 and the cooling water outlet port (OUT) 30. Such a collective and unitary cooling system implements an apparatus construction including a compact mechanism with a reduced number of components and having a high cooling efficiency.

Although the above embodiment has employed the integrated retention by the common retaining unit 26 of the three elements, i.e., the YAG rod 16, the excitation light supply unit 18 and the total reflection mirror 20, the retaining unit of the present invention may retain the output mirror 22 in lieu of the total reflection mirror 20 or may retain both the mirrors 20 and 22.

The above embodiment has provided the retaining unit 26 with a single cooling water inlet port (IN) 28 and a single cooling water outlet port (OUT) 30. However, the retaining unit 26 may have a plurality of cooling water inlet ports 28 and a plurality of cooling water outlet ports 30. In the above embodiment, the cooling water inlet port (IN) 28 and the cooling water outlet port (OUT) 30 have been provided in the coupling unit 44. However, the inlet port 28 and/or the outlet port 30 may be provided in the chamber 40 or the mirror retainer 42 such that the chamber 40 and the mirror retainer 42 can be coupled together by substantially omitting the coupling unit 44.

According to the laser oscillating apparatus of the present invention, as set forth hereinabove, the solid-state laser medium and the excitation light supply means, or in addition thereto the optical resonator mirror can effectively be cooled by a compact construction with a reduced number of components.

While an illustrative and presently preferred embodiment of the present invention has been described in detail herein, it is to be understood that the inventive concepts may be otherwise variously embodied and employed and that the appended claims are intended to be construed to include such variations except insofar as limited by the prior art.

## Claims

1. A laser oscillating apparatus comprising:
a solid-state laser medium having both end faces to emit a laser light when excited;
excitation light supply means for supplying an excitation light to said solid-state laser medium;
a pair of optical resonator mirrors arranged confronting said both end faces, respectively, of said solid-state laser medium;
a retaining unit for integratedly retaining said solid-state laser medium, said excitation light supply means and at least one of said pair of optical resonator mirrors; and
coolant supply means for supplying a coolant to said retaining unit.

2. A laser oscillating apparatus according to claim 1, wherein
said retaining unit includes:
first and second ports, one of which introduces said coolant, the other of which discharges said coolant;
a first coolant flow path thermally coupled to said solid-state laser medium;
a second coolant flow path thermally coupled to said excitation light supply means; and
a third coolant flow path for connecting said first and second coolant flow paths in series between said first and second ports.

3. A laser oscillating apparatus according to claim 2, wherein a plurality of said excitation light supply means are arranged for said solid-state laser medium, and wherein a plurality of said second coolant flow paths corresponding to said plurality of excitation light supply means are connected in parallel.

4. A laser oscillating apparatus according to claim 2 or 3, wherein said third coolant flow path includes:
a first connection passage for connecting said first port and one end of said first coolant flow path;
a second connection passage for connecting the other end of said first coolant flow path and one end of each of said second coolant flow paths; and
a third connection passage for connecting the other end of each of said second coolant flow paths and said second port.

5. A laser oscillating apparatus according to claim 1, wherein said retaining unit includes:
a chamber for accommodating said solid-state laser medium and said excitation light supply means;
a mirror retainer made of a heat-conductive material, for embracing and retaining said pair of optical resonator mirrors; and
a coupling unit made of a heat-conductive material and sandwiched between said chamber and said mirror retainer in a contacted manner, said coupling unit having a beam passage through which said laser light is propagated between said solid-state laser medium and said optical resonator mirrors.

6. A laser oscillating apparatus according to claim 5, wherein said retaining unit includes:
first and second ports formed in said coupling unit, one of which introduces said coolant, the other of which discharges said coolant;
a first coolant flow path thermally coupled to said solid-state laser medium within the interior of said chamber;
a second coolant flow path thermally coupled to said excitation light supply means within the interior of said chamber;
a third coolant flow path for connecting said first and second coolant flow paths; and
a fourth coolant flow path for connecting said first and second coolant flow paths to said first and second ports, respectively, within the interior of said chamber or said coupling unit.

7. A laser oscillating apparatus according to any one of claims 2, 3, 4 and 6, wherein said first coolant flow path embraces an excitation surface of said solid-state laser medium in a hermetically spaced-apart manner, said first coolant flow path formed of a light-transmissive tube through which an excitation light from said excitation light supply means passes for impingement on said excitation surface.

8. A laser oscillating apparatus according to any one of claims 2, 3, 4, 6 and 7, wherein said second coolant flow path is defined by a through hole extending through a heat-conductive member connected to a heat-generating portion of said excitation light supply means.

9. A laser oscillating apparatus according to any one of preceding claims, wherein said retaining unit includes means for adjusting the inclination of said optical resonator mirror.

10. A laser oscillating apparatus comprising:
a rod-shaped solid-state laser medium for emitting laser light from its axial end faces when its side surface is irradiated by an excitation light;
a light-transmissive tube embracing said solid-state laser medium in a spaced-apart manner and forming a first coolant flow path along the side surface of said solid-state laser medium;
an excitation laser unit having a laser beam emitting surface on which a plurality of semiconductor laser elements for generating an excitation laser beam are arrayed in line, having a heat-conductive retaining member for retaining said plurality of semiconductor laser elements, and having a second coolant flow path extending through said retaining member, said excitation laser unit being radially arranged around the side surface of said solid-state laser medium in such a manner that said laser beam emitting surface confronts the side surface of said solid-state laser medium;
first and second ports one of which introduces a coolant, the other of which discharge said coolant; and
a third coolant flow path for connecting said first coolant flow path and each of said second flow paths in series between said first and second ports, said third coolant flow path connecting said second coolant flow paths to one another in parallel.
